# EUROPEAN PATENT SPECIFICATION

(11) **EP 1 729 242 B1**
(45) Date of publication and mention of the grant of the patent: **22.07.2009**
(21) Application number: 06114287.3
(22) Date of filing: 19.05.2006
(51) Int. Cl.: G06K 9/00, G08B 13/196, G06T 7/00, H04N 7/18

(54) **Image masking apparatus and image distribution system**
Bildabdeckungsvorrichtung und Bildverteilungssystem
Appareil de masquage de l'image et système de distribution d'images

(30) Priority: 30.05.2005 JP 2005157375
(43) Date of publication of application: 06.12.2006
(73) Proprietor: Kyocera Corporation, Kyoto-shi, Kyoto-fu 612-8501 (JP)
(72) Inventor: Chishima, Makoto c/o Kyocera Corp. Yokohama Office, Kanagawa-ken (JP); Morita, Kugo c/o Kyocera Corp. Yokohama Office, Kanagawa-ken (JP)
(74) Representative: Walaski, Jan Filip

(56) References cited:
- WO-A-03/010728
- US-A1- 2003 108 240

## Description

### BACKGROUND OF THE INVENTION

### Field of the Invention

The present invention is related to an image masking apparatus and an image distribution system.

### Description of the Related Art

In recent years, it has become popular to film and distribute various views using a so-called "webcam" at a fixed point. It is possible to distribute such webcam views via Internet, and for example, this is described in WO 01/84839.

The webcam distributes the view filmed at a fixed point to many unspecified persons, therefore, it can easily be imagined that the image may include a person and therefore the provision of a measure for protecting the privacy of the person is required. However, an effective technology for protecting the privacy of a person appearing in the view is not developed yet, therefore, its development is strongly desired

US 2003/108240, on which the precharacterising portion of the appended claims is based, discloses an image processing system which providers automatic face or skin blurring of images.

### SUMMARY OF THE INVENTION

The present invention has been made in respect to such a problem and has an object to mask a specific subject like a person and so on shown in an image.

The present invention provides an image masking apparatus comprising:
a filming unit configured to film an image including a masking targer and output an image signal of the image including the masking target;
a specific object detection unit configured to detect a specific object in the image including the masking target and output a detection signal indicating a presence of the specific object; and
a masking operation unit configured to realize a portion of the image of the specific object as a masking target portion in the image including the masking target based on the image signal and the detection signal, and operate a masking operation on the masking target portion, characterised in that
the specific object detection unit is configured to detect the specific object based on a radio wave including object identification information transmitted from the specific object; and
the masking operation unit is configured to operate the making operation using a cryptography key corresponding to the object identification information.

A further aspect of the present invention is the image masking apparatus described above, wherein the masking operation unit detects an important portion for masking when the masking target portion is detected and operates the masking operation only on the important portion for masking.

A further aspect of the present invention is the image masking apparatus described above, wherein the specific object detection unit detects a position of the specific object in the image including the masking target and outputs the detection signal indicating the position of the specific object; and the masking operation unit realizes the masking target portion by comparing between the position of the specific object based on the detection signal and a position of the specific object based on the image signal.

A further aspect of the present invention is the image masking apparatus described above, wherein the filming unit and the specific object detection unit are remotely provided and communicate with each other via a wireless network.

A further aspect of the present invention is the image masking apparatus described above, wherein the masking operation unit operates the masking operation on a portion of a face of a person in the image including the masking target when the person is the speci6c object.

A further aspect of the present invention is an image distribution system comprising:
a filming apparatus configure to film the image including a masking target, detect a specific object in an image including the masking target, and outputs an image signal of the image including the masking target and a detection signal indicating presence of a specific object; and
an image distribution apparatus configured to realize a portion of the image in which the specific object appears as a masking target portion from the image including the masking target based on the image signal and the detection signal, generate a masked image of a view by operating a masking operation on the masking target portion, and transmit the masked image of the view to a user terminal, wherein
the filming apparatus and the image distribution apparatus are connected to each other via a communication network, and the image taken from the filming apparatus by the image distribution apparatus is transmitted to the user terminal based on a provision request from the user terminal, characterised in that
the filming apparatus is configured to detect the specific object based on a radio wave including object identification information transmitted from the specific object, and
the image distribution apparatus is configured to operate the masking operation using a cryptography key corresponding to a specific password that allows a user at the user terminal to unmask the masked image of the view by using the password.

A further aspect of the present invention is the image distribution system described above, wherein the image distribution apparatus detects an important portion for masking when the masking target portion is detected and operates the masking operation only on the important portion for masking.

A further aspect of the present invention is the image distribution system described above, wherein the filming apparatus detects a position of the specific object in the image including the masking target and outputs the detection signal indicating the position of the specific object; and the image distribution apparatus realizes the masking target portion by comparing between the position of the specific object based on the detection signal and a position of the specific object based on the image signal.

A further aspect of the present invention is an image distribution system including:
an image distribution apparatus that generates a masked image of a view by masking on a portion of a face of a person in an image including a masking target when the person is the specific object and distributed the masked image of the view.

In accordance with the present invention, a specific subject filmed in an image including a target, to be masked can be masked. Therefore, if the specific subject is a person, it is possible to project the privacy of the person reliably.

### BRIEF DESCRIPTION OF THE DRAWINGS

Fig. 1 is a system structure figure of an image distribution system in one embodiment of the present invention.
Fig. 2 is a block diagram showing a functional structure of a mobile camera of the image distribution system in one embodiment of the present invention.
Fig. 3 is a block diagram showing a functional structure of a mobile camera server of the image distribution system in one embodiment of the present invention.
Fig. 4 is a flowchart showing an operation of the image distribution system in one embodiment of the present invention.
Fig. 5 is a figure showing a masking and encrypting operation of the mobile camera server applied to an image of a view in one embodiment of the present invention.
Fig. 6 is a figure showing an unmasking operation of a user terminal applied to an image of a view in one embodiment of the present invention.

### DETAILED DESCRIPTION OF THE INVENTION

Hereinafter, referring to the figures, one embodiment of the present invention is explained.

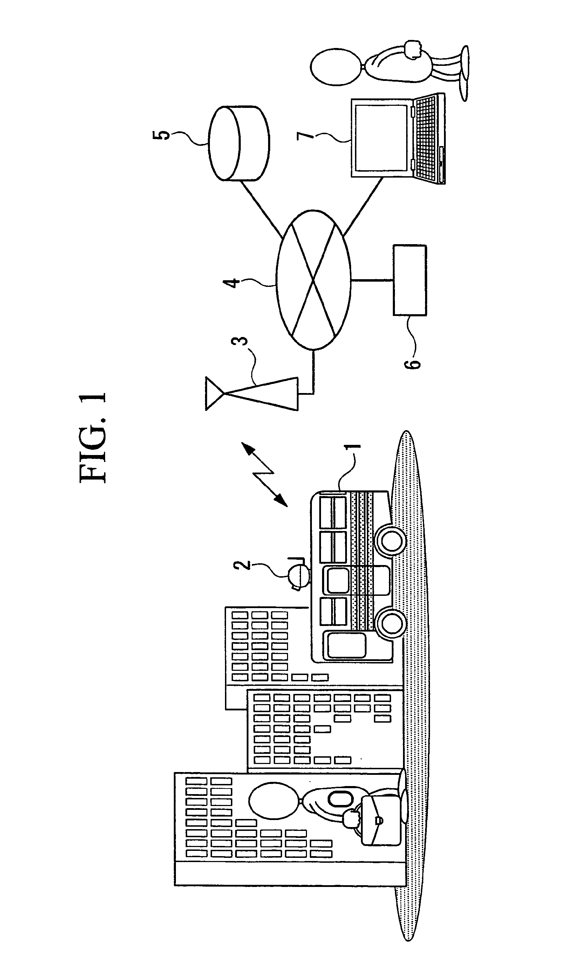

Fig. 1 is a system structure figure of an image distribution system in this embodiment of the present invention.

As shown in this figure, the image distribution system is constructed from a mobile camera 2 installed on a car 1 (mobile body), a base station 3 which operates wireless communication with the mobile camera 2, a network 4 connected with the base station 3, a mobile camera server 5 connected to the network 4, a cryptograph key server 6 similarly connected to the network 4 and a user terminal 7.

In the construction elements above of the image distribution system, the mobile camera 2 is a filming apparatus in this embodiment and the mobile camera server 5 is an image distribution apparatus in this embodiment. The mobile camera 2 and the mobile camera server 5 constitute an image masking apparatus in this embodiment.

The car 1 is a mobile body that moves often in a predetermined area, for example, it is a taxi or a shuttle bus. The mobile camera 2 is mounted on such a car 1, films surrounding views on a moving path of the car 1 in accordance with operation from the mobile camera server 5, and transmits the images of the view obtained by filming to the mobile camera server 5 via the base station 3 and the network 4.

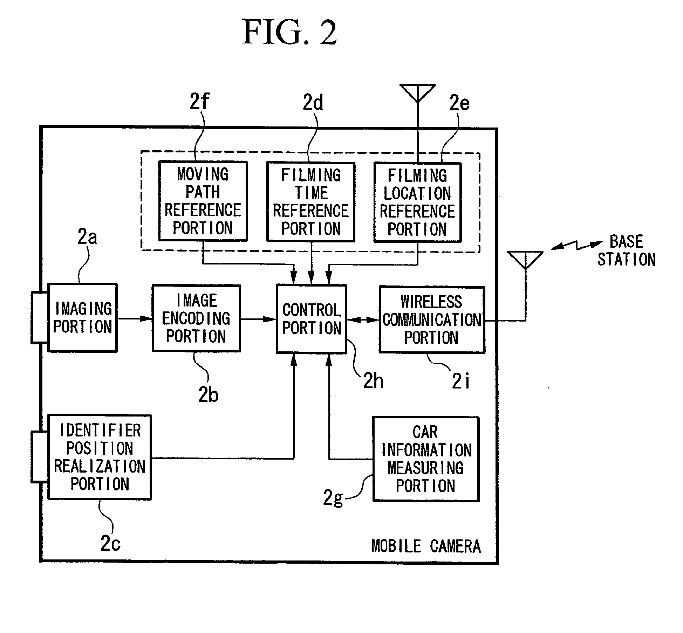

Fig. 2 is a block diagram showing a functional structure of the mobile camera 2. As shown in this figure, the mobile camera 2 is constructed from an imaging portion 2a, an image encoding portion 2b, an identifier position realization portion 2c, a filming time reference portion 2d, a filming location reference portion 2e, a moving path reference portion 2f, a car information measuring portion 2g, a control portion 2h, a wireless communication portion 2i and so on.

The imaging portion 2a is a camera that films the surrounding view of the car 1 as images (images of view) and outputs image signals of the images of the view to the image encoding portion 2b. The image encoding portion 2b encodes the image signals that are analog signals in accordance with a predetermined encoding method, that is, encodes them to digital signals (image data of the view) and outputs them to the control portion 2h. More precisely, the image of the view filmed by the imaging portion 2a is converted to the digital signals by an AD conversion portion (not shown in the figures), and the image encoding portion 2b encodes the digital signals in accordance with the predetermined encoding method. The identifier position realization portion 2c detects a position of a specific object such as a person included in the image of the view and outputs it to the control portion 2h.

For example, in a case where the specific object is a person, the person always has a transmitter (RF-ID) to which an ID number (specific object realization information) is assigned as an identifier. The identifier position realization portion 2c detects a position of the RF-ID (ID position) in the image of the view filmed by the imaging portion 2a based on the radio wave transmitted from the RF-ID, and outputs ID position data constructed from the ID position and the ID number to the control portion 2h. It should be noted that various methods can be considered for detecting the identifier and the ID position other than the above described method of detecting the RF-ID or the radio wave transmitted from the RF-ID.

The filming time reference portion 2d, the filming location reference portion 2e and the moving path reference portion 2f are functions constructed from a GPS (Global Positioning System). The filming time reference portion 2d checks the filming time upon filming the image of the view by the imaging portion 2a, and outputs it as filming time data to the control portion 2h. The filming location reference portion 2e checks the filming location (location on the map) upon filming the image of the view by the imaging portion 2a, and outputs it as filming location data to the control portion 2h. The moving path reference portion 2f checks the moving path of the car 1 (mobile body) and outputs it as moving path data to the control portion 2h.

The car information measuring portion 2g checks property information of the mobile body such as the speed of the car 1 (moving speed) and the direction of the car 1 (moving direction) and outputs it to the control portion 2h. The control portion 2h controls operations of the construction elements above, generates an image data set by assigning information input from the identifier position realization portion 2c, the filming time reference portion 2d and the filming location reference portion 2e to the image data of the view input from the image encoding portion 2b, and outputs it to the wireless communication portion 2i. In other words, the image data set is constructed from the image data of the view, the ID position data, the filming time data and the filming location data. The control portion 2h outputs the position of the car 1 as car position information acquired from the moving path reference portion 2f and the car information measuring portion 2g to the wireless communication portion 2i too.

The wireless communication portion 2i controlled by the control portion 2h operates the wireless communication with the mobile camera server 5 via the base station 3 and the network 4. This wireless communication portion 2i operates, for example, reception of a filming request from the mobile camera server 5 and the transmission of the image data set and the car position data to the mobile camera server 5. Various wireless communication methods can be considered as communication methods of the wireless communication portion 2i such as wireless LAN (Local Area Network), CDMA (Code Division Multiplex Access) 2000 1x, CDMA 2000 1xEV-DO (1x Evolution Data Only), Blue Tooth and the like.

As shown above, the mobile camera 2 as a mobile station moves together with the car 1, however, the base station 3, as a ground station fixed on the ground, relays communication between the mobile camera 2 and the mobile camera server 5. The network 4 is, for example, the Internet and connects the base station 3 and the mobile camera server 5 to each other. The mobile camera server 5 operates the mobile camera 2 via the network 4 along with storing the image data set one by one received from the mobile camera 2 via the network 4, and provides the image of the view in accordance with requests from the user terminal 6.

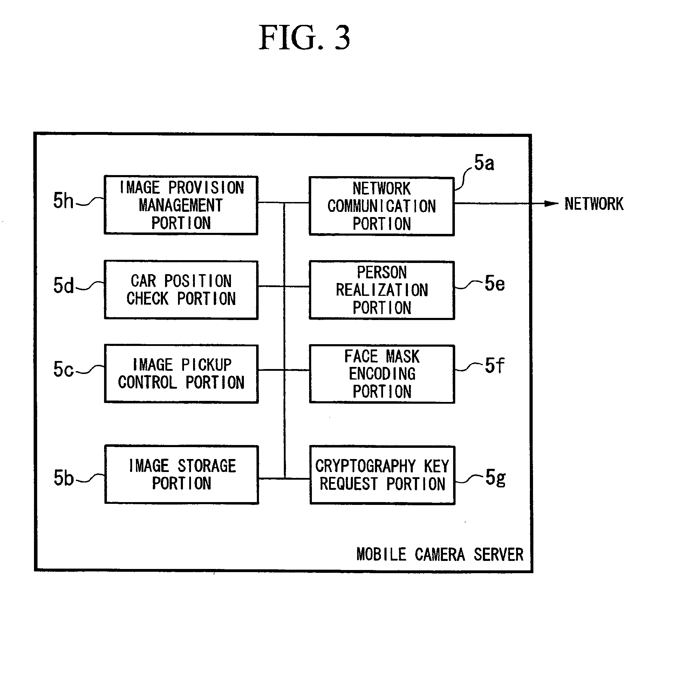

Fig. 3 is a block diagram showing a structure of the mobile camera server 5. As shown in this diagram, the mobile camera server 5 is constructed by connecting a network communication portion 5a, an image storage portion 5b, an image pickup control portion 5c, a car position check portion 5d, a person recognizing portion 5e, a face mask encoding portion 5f, a cryptography key request portion 5g and a image provision management portion 5h via a bus line each other.

The network communication portion 5a communicates with the mobile camera 2 and the user terminal 6 via the network 4. The image storage portion 5b stores the image data set received by the network communication portion 5a via the network 4 from the mobile camera 2 as an image database. The image pickup control portion 5c controls picking up the image dataset from the mobile camera 2. The car position check portion 5d checks the position of the car 1, that is the position of the mobile camera 2, based on the car position data received by the network communication portion 5a from the mobile camera 2 via the network 4.

The person recognizing portion 5e recognizes a person (whose privacy is to be protected) included in the image data of the view in the image data set, as a specific object. The face mask encoding portion 5f masks the face of the person realized by the person recognizing portion 5e using the cryptography. The cryptography key request portion 5g obtains a cryptography key that is essential for masking with the cryptography by the face mask encoding portion 5f from the cryptography key server 6 via the network communication portion 5a.

The image provision management portion 5h supplies provided image data to the user terminal 7 via the network 4 in accordance with an image supply request accepted from the user terminal 7 via the network 4. The provided image data is constructed from the image data of the view (masked image data) in which only the face, which is specified as a part to be masked, of the specific object (person) is masked with the cryptography and the position data (the mask position data) of the part to be masked (that is the face) in the masked image of the view shown by the masked image data.

The cryptography key server 6 stores predetermined cryptography keys in correspondence with the ID numbers of the RF-ID respectively in a database, and supplies the cryptography key to the mobile camera server 5 in accordance with a cryptography key request via the network 4. The user terminal 7 transmits a request for supplying the image of the view to the mobile camera server 5 via the network 4, and receives the masked image data from the mobile camera server 5 via the network 4.

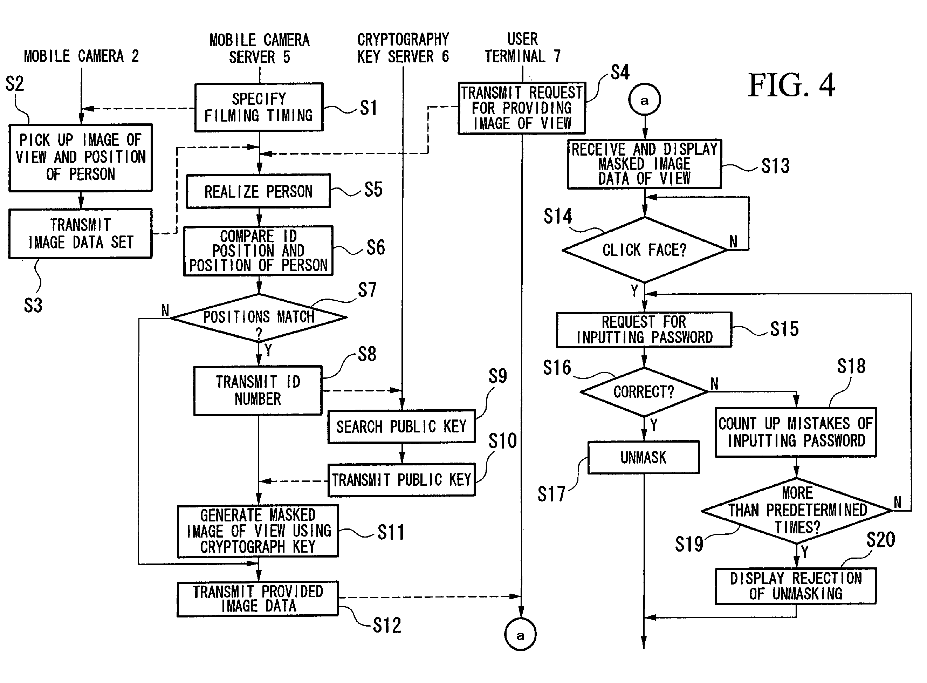

Next, detailed operation of the image distribution system constructed as above is described in accordance with a flowchart shown in Fig. 4.

First, the mobile camera server 5 designates a timing to film the image of the view to the mobile camera 2 (step S1). In other words, in the mobile camera server 5, the image pickup control portion 5c generates designation information for designating the timing to film the image of the view, and the designation information is transmitted from the image pickup control portion 5c to the mobile camera 2 via the network communication portion 5a.

The mobile camera 2 moves together with the car 1, films the view as the image of the view continuously in accordance with the timing based on the timing designation, and detects a position of the person in the image of the view (step S2). In other words, in the mobile camera 2, the timing designation received by the wireless communication portion 2i from the mobile camera server 5 is supplied to the control portion 2h, and the control portion 2h takes in the image data of the view input from the image encoding portion 2b based on the timing designation and takes in the ID position data from the identifier position realization portion 2c.

Moreover, the control portion 2h takes in the filming time data from the filming time reference portion 2d and the filming location data from the filming location reference portion 2e, and generates the image data set from these data. The control portion 2h transmits the image data set to the mobile camera server 5 via the wireless communication portion 2i (step S3). In the mobile camera server 5, the image data set is received by the network communication portion 5a and stored in the image storage portion 5b one by one.

In such a manner, the mobile camera server 5 stores the image data set one by one generated from the image of the view filmed by the mobile camera 2 moving in accordance with the car 1, and on the other hand, it always receives requests for sending the image of the view from the user terminal 7. In other words, the user terminal 7 transmits the request for sending the image of the view to the mobile camera server 5 (step S4), and the request for sending the image of the view is received by the network communication portion 5a and is input by the image provision management portion 5h. The image provision management portion 5h searches and picks up the image data set corresponding to the image of the view specified in the request for sending the image of the view from the image storage portion 5b and supplies the image data of the view included in the image data set to the person recognizing portion 5e.

As a result of this operation, the person recognizing portion 5e checks whether or not a person is included in the image of the view included in the image data of the view by operating a predetermined image operation, and realizes a position of the person in the image of the view (step S5). After obtaining the position of the person from the person recognizing portion 5e, the image provision management portion 5h compares and checks the position of the person to the ID position indicated by the ID position data included in the image data set (step S6), and detects whether or not both of them match each other (step S7). If the detection result is "Yes", then the image provision management portion 5h transmits the ID number included in the ID position data to the cryptography key server 6 via the network communication portion 5a (step S8).

Upon receiving the ID number from the mobile camera server 5, the cryptography key server 6 searches for the cryptography key corresponding to the ID number (step S9), and transmits the found cryptography key as a search result to the mobile camera server 5 (step S10). Upon receiving the cryptography key from the cryptography key server 6 via the network communication portion 5a, the image provision management portion 5h supplies the cryptography key together with a result of person realization by the person recognizing portion 5e to the face mask encoding portion 5f.

The face mask encoding portion 5f generates the image data (masked image data) of the masked image of the view by masking and encrypting only the face of the person in the image of the view based on the result of person realization (step S 11). The image provision management portion 5h transmits provided image data constructed from the masked image data and mask position data indicating the position of the face, which is a portion to be masked, to the user terminal 7 (step S12).

On the other hand, if the detection result is "No" in step S7, then the operations from step S8 to step S11 are not performed, therefore, the masked image of the view is not generated and the image data of the view itself is transmitted as the provided image data to the user terminal 7.

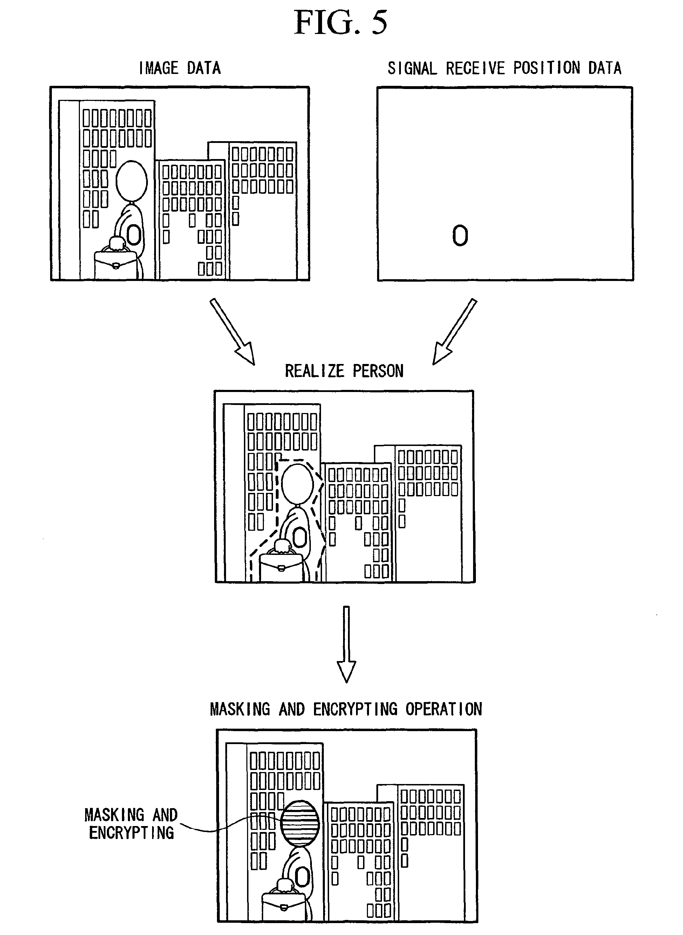

Fig. 5 is a figure showing a masking and encrypting operation of the mobile camera server 5 applied to an image of the view. As shown in this figure, in the masking and encrypting operation of the mobile camera server 5, the person (the specific object) in the image of the view is detected based on the image of the view including the person and the ID position of the RF-ID in the image of the view, the position to be masked, which is the face, is detected, and the face is masked using the cryptography. Therefore, compared to a case of detecting the person only from the image of the view without using the ID position, it is possible to detect the person more accurately. Therefore, it is possible to mask the face of the person more accurately, and the privacy of the person shown in the image of the view can be reliably protected.

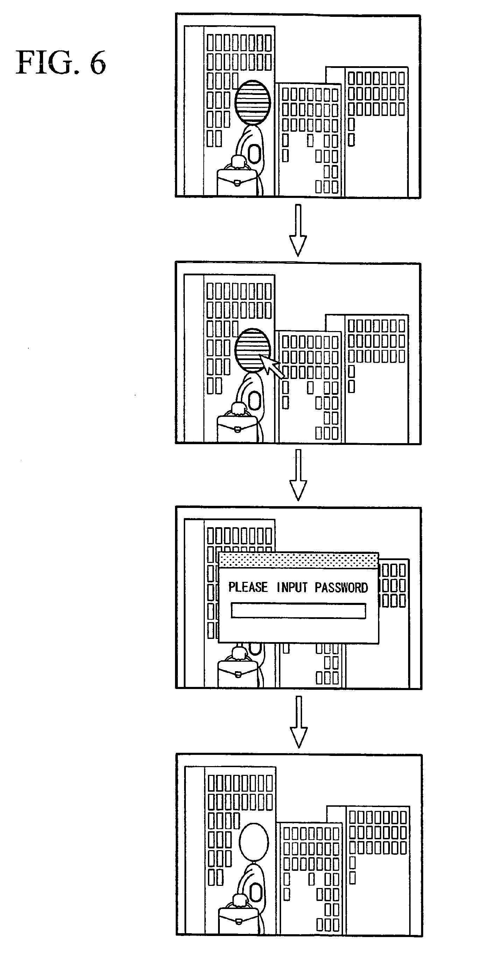

Next, upon receiving the provided image data from the mobile camera server 5, the user terminal 7 displays the masked image data of view based on the provided image data (step S13). With respect to the masked image data of view displayed as shown in Fig. 6, if the user operates the user terminal 7 and clicks the part of the face being masked, which is the masked part of the masked image of the view indicated by the masked position data (step S14), then the user terminal 7 requests that a password be input by showing a sub window on the masked image of the view (step S 15).

The password is needed to release the masked status of the part of the face, and corresponds to the cryptography key applied to the masking and encrypting operation upon the part of the face by the mobile camera server 5. Therefore, if the user inputs the correct password corresponding to the cryptography key applied to the masking and encrypting operation (step S16), then the user terminal 7 unmasks the part of the face as shown in Fig. 6 by using the correct password. On the other hand, if the correct password is not input, the user terminal 7 counts up the number of mistakes while inputting the password (step S19), and when the count is more than a predetermined number (step S19), a display rejecting unmasking is shown (step S20).

The scope of the present invention is limited in the embodiment above, for example, modifications as follows can be considered.
(1) In the embodiment above, the specific object is the person and the face of the person is masked and encrypted because it is the more important part for masking; however, in the present invention, the specific object is not limited to the person. The image including the masking target is not limited to the image of the view.
(2) In the embodiment above, the mobile camera 2 which films the image of the view (the image including the masking target) while moving is a filming apparatus; however, the filming apparatus of the present invention is not limited to the mobile camera 2. For example, a camera at a fixed point fixed on the ground can be the filming apparatus.
(3) In the embodiment above, the face of the person shown in the image of the view is masked using the cryptography key; however, this is a solution to make it possible to unmask the masked status at the user terminal 7 by using the password corresponding to the cryptography key. Therefore, if it is not needed to unmask the masked status at the user terminal 7, unmasking does not need to be considered, in other words, it is possible to assume the masking and encrypting operation upon the image of the view without using the cryptography key.

While preferred embodiment of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. An image masking apparatus (2) comprising:
a filming unit (2a) configured to film an image including a masking target and output an image signal of the image including the masking target;
a specific object detection unit (2h) configured to detect a specific object in the image including the masking target and output a detection signal indicating a presence of the specific object; and
a masking operation unit (2h) configured to realize a portion of the image of the specific object as a masking target portion in the image including the masking target based on the image signal and the detection signal, and operate a masking operation on the masking target portion, **characterised in that**
the specific object detection unit (2h) is configured to detect the specific object based on a radio wave including object identification information transmitted from the specific object; and
the masking operation unit (2h) is configured to operate the masking operation using a cryptography key corresponding to the object identification information.

2. The image masking apparatus according to claim 1, wherein
the masking operation unit (2h) is configured to detect an important portion for masking when the masking target portion is detected and operate the masking operation only on the important portion for masking.

3. The image masking apparatus according to claim 1, wherein
the specific object detection unit (2h) is configured to detect a position of the specific object in the image including the masking target and output the detection signal indicating the position of the specific object, and
the masking operation unit (2h) is configured to realize the masking target portion by comparing between a position of the specific object based on the detection signal and a position of the specific object based on the image signal.

4. The image masking apparatus according to claim 1, wherein
the filming unit (2a) and the specific object detection unit (2h) are remotely provided and communicate with each other via a wireless network.

5. The image masking apparatus according to claim 1, wherein
the masking operation unit (2h) is configured to operate the masking operation on a portion of a face of a person in the image including the masking target when the person is the specific object.

6. An image distribution system comprising:
a filming apparatus (2a, 2b, 2c, 2h) configured to film the image including a masking target, detect a specific object in an image including the masking target, and output an image signal of the image including the masking target and a detection signal indicating presence of a specific object; and
an image distribution apparatus (2h, 2i) configured to realize a portion of the image in which the specific object appears as a masking target portion from the image including the masking target based on the image signal and the detection signal generate a masked image of a view by operating a masking operation on the masking target portion, and transmit the masked image of the view to a user terminal (7), wherein
the filming apparatus (2a, 2b, 2c, 2h) and the image distribution apparatus (2h, 2i) are connected to each other via a communication network, and the image taken from the filming apparatus (2a, 2b, 2c, 2h) by the image distribution apparatus (2h, 2i) is transmitted to the user terminal (7) based on a provision request from the user terminal (7),
**characterised in that**
the filming apparatus (2a, 2b, 2c, 2h) is configured to detect the specific object based on a radio wave including object identification information transmitted from the specific object, and
the image distribution apparatus (2h, 2i) is configured to operate the masking operation using a cryptography key corresponding to a specific password that allows a user at the user terminal to unmask the masked image of the view by using the password.

7. The image distribution system according to claim 6, wherein
the image distribution apparatus (3h, 2i) is configured to detect an important portion for masking when the masking target portion is detected and operate the masking operation only on the important portion for masking.

8. The image distribution system according to claim 6, wherein
the filming apparatus (2a, 2b, 2c, 2h) is configured to detect a position of the specific object in the image including the masking target and output the detection signal indicating the position of the specific object, and
the image distribution apparatus (2h, 2i) is configured to realize the masking target portion, by comparing between the position of the specific object based on the detection signal and a position of the specific object based on the image signal.

## Patentansprüche

1. Bildmaskierungsvorrichtung (2), umfassend:
eine Filmeinheit (2a), die dazu eingerichtet ist, ein Bild zu filmen, das ein Maskierungsziel enthält, und ein Bildsignal des Bildes auszugeben, das das Maskierungsziel enthält;
eine Erfassungseinheit für bestimmte Objekte (2h), die dazu eingerichtet ist, ein bestimmtes Objekt in dem Bild zu erfassen, das das Maskierungsziel enthält, und ein Erfassungssignal auszugeben, das ein Vorhandensein des bestimmten Objektes kennzeichnet; und
eine Maskierungsoperationseinheit (2h), die dazu eingerichtet ist, einen Bereich des Bildes von dem bestimmten Objekt basierend auf dem Bildsignal und dem Erfassungssignal als einen Maskierungszielbereich in dem Bild zu erkennen, das das Maskierungsziel enthält, und eine Maskierungsoperation auf dem Maskierungszielbereich durchzuführen, **dadurch gekennzeichnet, dass**
die Erfassungseinheit für bestimmte Objekte (2h) dazu eingerichtet ist, das bestimmte Objekt basierend auf einer von dem spezifischen Objekt übertragenen Funkwelle zu erfassen, welche eine Objektidentifikationsinformation enthält; und
die Maskierungsoperationseinheit (2h) dazu eingerichtet ist, die Maskierungsoperation mittels eines kryptografischen Schlüssels durchzuführen, der der Objektidentifikationsinformation entspricht.

2. Bildmaskierungsvorrichtung nach Anspruch 1, wobei
die Maskierungsopenationseinheit (2h) dazu eingerichtet ist, einen wichtigen Bereich zum Maskieren zu erfassen, wenn der Maskierungszielbereich erfasst wird, und die Maskierungsoperation ausschließlich auf dem wichtigen Bereich zum Maskieren durchzuführen.

3. Bildmaskierungsvorrichtung nach Anspruch 1, wobei
die Erfassungseinheit für bestimmte Objekte (2h) dazu eingerichtet ist, eine Position des bestimmten Objektes in dem Bild zu erfassen, welches das Maskierungsziel enthält, und das Erfassungssignal auszugeben, das die Position des bestimmten Objektes kennzeichnet, und
die Maskierungsoperationseinheit (2h) dazu eingerichtet ist, den Maskierungszielbereich durch Vergleichen einer Position des bestimmten Objektes basierend auf dem Erfassungssignal und einer Position des bestimmten Objektes basierend auf dem Bildsignal zu erkennen.

4. Bildmaskierungsvorrichtung nach Anspruch 1, wobei
die Filmeinheit (2a) und die Erfassungseinheit für bestimmte Objekte (2h) entfernt bereitgestellt werden und miteinander über ein drahtloses Netzwerk kommunizieren.

5. Bildmaskierungsvorrichtung nach Anspruch 1, wobei
die Maskierungsoperationseinheit (2h) dazu eingerichtet ist, die Maskierungsoperation auf einem Bereich eines Gesichtes von einer Person in dem Bild durchzuführen, das das Maskierungsziel enthält, wenn die Person das bestimmte Objekt ist.

6. Bildverteilungssystem, umfassend:
eine Filmvorrichtung (2a, 2b, 2c, 2h), die dazu eingerichtet ist, das Bild zu filmen, das ein Maskierungsziel enthält, ein bestimmtes Objekt in einem Bild zu erfassen, das das Maskierungsziel enthält, und ein Bildsignal des Bildes, das das Maskierungsziel enthält, und ein Erfassungssignal auszugeben, das das Vorhandensein eines bestimmten Objektes kennzeichnet; und
eine Bildverteilungsvorrichtung (2h, 2i), die dazu eingerichtet ist, einen Bereich des Bildes, in welchem das bestimmte Objekt erscheint, basierend auf dem Bildsignal und dem Erfassungssignal als einen Maskierungszielbereich des Bildes zu erkennen, das das Maskierungsziel enthält, ein maskiertes Bild einer Ansicht durch Durchführen einer Maskierungsoperation auf dem Maskierungszielbereich zu erzeugen, und das maskierte Bild der Ansicht an ein Nutzerendgerät (7) zu übertragen, wobei
die Filmvorrichtung (2a, 2b, 2c, 2h) und die Bildverteilungsvorrichtung (2h, 2i) miteinander über ein Kommunikationsnetzwerk verbunden sind, und das von der Filmvorrichtung (2a, 2b, 2c, 2h) durch die Bilderfassungsvorrichtung (2h, 2i) aufgenommene Bild basierend auf einer Bereitstellungsanfrage von dem Nutzerendgerät (7) an das Nutzerendgerät (7) übertragen wird, **dadurch gekennzeichnet, dass**
die Filmvorrichtung (2a, 2b, 2c, 2h) dazu eingerichtet ist, das bestimmte Objekt basierend auf einer von dem bestimmten Objekt übertragenen Funkwelle, die eine Objektidentifikationsinformation enthält, zu erfassen, und
die Bildverteilungsvorrichtung (2h, 2i) dazu eingerichtet ist, die Maskierungsoperation mittels eines kryptografischen Schlüssels durchzuführen, der einem bestimmten Passwort entspricht, welches einem Nutzer des Nutzerendgerätes erlaubt, das maskierte Bild der Ansicht durch Verwendung des Passworts zu demaskieren.

7. Bildverteilungssystem nach Anspruch 6, wobei
die Bildverteilungsvorrichtung (2h, 2i) dazu eingerichtet ist, einen wichtigen Bereich zum Maskieren zu erfassen, wenn der Maskierungszielbereich erfasst wird, und die Maskierungsoperation ausschließlich auf dem wichtigen Bereich zum Maskieren durchzuführen.

8. Bildverteilungssystem nach Anspruch 6, wobei
die Filmvorrichtung (2a, 2b, 2c, 2h) dazu eingerichtet ist, eine Position des bestimmten Objektes in dem Bild zu erfassen, welches das Maskierungsziel enthält, und das Erfassungssignal auszugeben, welches die Position des bestimmten Objektes kennzeichnet, und
die Bildverteilungsvorrichtung (2h, 2i) dazu eingerichtet ist, den Maskierungszielbereich durch Vergleichen der Position des bestimmten Objektes basierend auf dem Erfassungssignal und einer Position des bestimmten Objektes basierend auf dem Bildsignal zu erkennen.

## Revendications

1. Appareil (2) de masquage d'image comportant :
une unité (2a) de filmage configurée pour filmer une image comprenant une cible de masquage et pour délivrer en sortie un signal d'image de l'image comprenant la cible de masquage ;
une unité (2h) de détection d'objet spécifique configurée pour détecter un objet spécifique dans l'image comprenant la cible de masquage et pour délivrer en sortie un signal de détection indiquant une présence de l'objet spécifique ; et
une unité (2h) d'opération de masquage configurée pour réaliser une partie de l'image de l'objet spécifique sous la forme d'une partie de cible de masquage dans l'image comprenant la cible de masquage sur la base du signal d'image et du signal de détection, et pour exécuter une opération de masquage sur la partie de cible de masquage,
**caractérisé en ce que**
l'unité (2h) de détection d'objet spécifique est configurée pour détecter l'objet spécifique sur la base d'une onde radio comprenant une information d'identification d'objet transmise depuis l'objet spécifique ; et
l'unité (2h) d'opération de masquage est configurée pour exécuter l'opération de masquage en utilisant une clé de cryptographie correspondant à l'information d'identification de l'objet.

2. Appareil de masquage d'image selon la revendication 1, dans lequel
l'unité (2h) d'opération de masquage est configurée pour détecter une partie importante pour un masquage lorsque la partie de cible de masquage est détectée et pour exécuter l'opération de masquage uniquement sur la partie importante pour le masquage.

3. Appareil de masquage d'image selon la revendication 1, dans lequel
l'unité (2h) de détection d'objet spécifique est configurée pour détecter une position de l'objet spécifique dans l'image comprenant la cible de masquage et pour délivrer en sortie le signal de détection indiquant la position de l'objet spécifique ; et
l'unité (2h) d'opération de masquage est configurée pour réaliser la partie de cible de masquage par une comparaison entre une position de l'objet spécifique basée sur le signal de détection et une position de l'objet spécifique basée sur le signal d'image.

4. Appareil de masquage d'image selon la revendication 1, dans lequel
l'unité de filmage (2a) et l'unité (2h) de détection d'objet spécifique sont placées à distance et communiquent entre elles par un réseau sans fil.

5. Appareil de masquage d'image selon la revendication 1, dans lequel
l'unité (2h) d'opération de masquage est configurée pour exécuter l'opération de masquage sur une partie du visage d'une personne dans l'image comprenant la cible de masquage lorsque la personne est l'objet spécifique.

6. Système de distribution d'image comportant :
un appareil de filmage (2a, 2b, 2c, 2h) configuré pour filmer l'image comprenant une cible de masquage, pour détecter un objet spécifique dans une image comprenant la cible de masquage, et pour délivrer en sortie un signal d'image de l'image comprenant la cible de masquage et un signal de détection indiquant la fréquence d'un objet spécifique, et
un appareil (2h, 2i) de distribution d'image configuré pour réaliser une partie de l'image dans laquelle l'objet spécifique apparaît sous la forme d'une partie de cible de masquage à partir de l'image comprenant la cible de masquage basée sur le signal d'image et le signal de détection, pour générer une image masquée d'une vue en exécutant une opération de masquage sur la partie de cible de masquage, et en transmettant l'image masquée de la vue à un terminal (7) d'utilisateur, dans lequel
l'appareil de filmage (2a, 2b, 2c, 2h) et l'appareil de distribution d'image (2h, 2i) sont connectés entre eux par un réseau de communication, et l'image prise à partir de l'appareil de filmage (2a, 2b, 2c, 2h) par l'appareil (2h, 2i) de distribution d'image est transmise au terminal (7) d'utilisateur sur la base d'une demande de fourniture provenant du terminal d'utilisateur (7), **caractérisé en ce que**
l'appareil de filmage (2a, 2b, 2c, 2h) est configuré pour détecter l'objet spécifique sur la base d'une onde radio comprenant une information d'identification d'objet transmise depuis l'objet spécifique, et
l'appareil (2h, 2i) de distribution d'image est configuré pour exécuter l'opération de masquage en utilisant une clé de cryptographie correspondant à un mot de passe spécifique qui permet à un utilisateur situé au terminal d'utilisateur de démasquer l'image masquée de la vue en utilisant le mot de passe.

7. Système de distribution d'image selon la revendication 6, dans lequel
l'appareil (2h, 2i) de distribution d'image est configuré pour détecter une partie importante pour un masquage lorsque la partie de cible de masquage est détectée et pour exécuter l'opération de masquage uniquement sur la partie importante pour le masquage.

8. Système de distribution d'image selon la revendication 6, dans lequel
l'appareil de filmage (2a, 2b, 2c, 2h) est configuré pour détecter une position de l'objet spécifique dans l'image comprenant la cible de masquage et pour délivrer en sortie le signal de détection indiquant la position de l'objet spécifique, et
l'appareil (2h, 2i) de distribution d'image est configuré pour réaliser la partie de cible de masquage par une comparaison de la position de l'objet spécifique basée sur le signal de détection et d'une position de l'objet spécifique basée sur le signal d'image.
